# EUROPEAN PATENT SPECIFICATION

(11) **EP 3 569 945 B1**
(45) Date of publication and mention of the grant of the patent: **15.05.2024**
(21) Application number: 19174920.9
(22) Date of filing: 16.05.2019
(51) Int. Cl.: F24F 13/02, F16L 23/14

(54) **CONNECTOR FOR VENTILATION COMPONENTS**
VERBINDER FÜR BELÜFTUNGSKOMPONENTEN
CONNECTEUR POUR COMPOSANTS DE VENTILATION

(30) Priority: 18.05.2018 SE 1850588
(43) Date of publication of application: 20.11.2019
(73) Proprietor: Lindab Ventilation AB, 269 82 Båstad (SE)
(72) Inventor: HANSEN, Thorkild, 9220 ÅLBORG Ø (DK); JØRGENSEN, Carsten Reymond, 6000 KOLDING (DK)
(74) Representative: Zacco Sweden AB

(56) References cited:
- WO-A1-2012/056083
- US-A- 4 046 409
- US-A- 5 165 730
- US-A1- 2004 250 596
- US-A1- 2008 134 745

## Description

### TECHNICAL FIELD

The invention relates to a device for connecting ducts for air conditioning, heating and/or ventilating systems, as a detachable joint between the ducts in air-tight way.

### BACKGROUND ART

During recent decades, designers of systems for air condition, heat and/or ventilation have developed a myriad of differing devices, systems and methods of connecting duct or tube elements and similar components in such systems to achieve effectiveness, in particular air-tight seals of joints between ends of such duct or tube elements.

One known method of connecting uses a connector being an inner tube for insertion into outer ducts to join the ends of the ducts by means of fastening means (screws or rivets) driven through the overlapping inner tube and outer duct wall sections. The installer/fitter has to drill holes through the inner tube and outer duct walls for the fastening means on the installation site, making this tube connection cumbersome, time-consuming and requires more tools, e.g. electric drills, screw drivers, riveting machines, to be carried around.

A known connecting device/connector is disclosed in US 4 046 409 as a joining arrangement for rectangular/square ducts, by which a tight connection between the ducts is obtained after assembly, e.g. under roofs. This connector has four separate ledge members not fixedly attached to each other that make up the whole connector only when connected to the ducts, one ledge member for each side of the square ducts by point welding, riveting, gluing or plate screws. Each ledge member has a part protruding outwards from the duct, one ledge member part protrudes perpendicularly relative the duct length and one ledge member part protrudes inclined relative the longitudinal duct direction. This connector is bulky and cumbersome as it has several loose parts and complicated requiring additional equipment, such as welding units, screw drivers, riveting machines, and/or glue to be installed at the installation site.

Another known device/connector is disclosed in WO 2012/056083 A1 as a joining arrangement for rectangular ducts substantially corresponding to the preamble of the independent claim.

### SUMMARY OF THE INVENTION

It is, accordingly, an object of the present invention is to provide a connecting device or connector for airproof joining of square-shaped or rectangular ventilation duct ends that overcomes deficiencies of the prior art, such as indicated above.

An object of the invention is to provide a connecting device or connector for airproof joining and/or closing of square-shaped or rectangular ventilation duct ends, which connecting device or connector has a low building height, in fact very low or even ultra-low, requiring less space when installed and stored as a spare part since it is more compact than known ones.

Another object of the invention is to provide a connecting device or connector for airproof joining of square-shaped or rectangular ventilation duct ends that enables a simple operation and handling of the connector by making it more compact and easy to handle, when using it as it has a smaller size compared to known connectors.

Still another object of the invention is to provide a less demanding installation and handling of the connector creating a more ergonomically optimised way of working and an ergonomically less cumbersome working posture and effort when being carried about and handled by the operator as it has a lower weight compared to known connectors.

Yet another object is to create an easier installation of the connector when inserted at duct ends, since its compactness does not require such large space as in the prior art and involves less effort by an installer or fitter.

An additional object is to provide an installation of a connector in more narrow spaces, since its smaller size and improved compactness does not require such large space as for the prior art, whereby space required for installation of the ducts is minimised or at least optimised enabling duct elements to be installed or fitted into such small spaces of buildings not possible hitherto for rounded ones.

These objects are achieved by means of a connector for airproof joining of square-shaped or rectangular ventilation duct ends, as claimed in the associated independent claims, preferred variants thereof being defined in the associated dependent claims.

At least one of the above and/or further objects is/are achieved by means of a connector for airproof joining of square-shaped or rectangular ventilation duct ends according to claim 1. This enables using the connector in narrow/tight areas/spaces, such as inside/along roofs and on/inside marine vessels and at/in/inside marine installations where spaces are scarce/small due to optimised design.

Further objects and features of the present invention will appear from the following definitions of aspects/examples of the invention.

According to an aspect/embodiment, the connector according to the above may further comprise the U-shaped cross-section of each connector half having legs of different protruding lengths.

According to another embodiment/aspect, in the connector according to any of the above, one leg of the U-shaped cross-section of each connector half is one outer flange being the outermost/external periphery of the connector half and the other leg of the U-shaped cross-section of each connector half is one inner flange being the innermost/internal periphery of the connector half.

According to yet another embodiment/aspect, in the connector according to any of the above, the legs or flanges of the square or rectangular circumferential grooved profile extend in the longitudinal direction of the connector and its direction of joining.

According to still another embodiment/aspect, in the connector according to any of the above, the outer flange of the square or rectangular circumferential grooved profile protrudes a distance from the base of the associated U-shaped cross-section being larger/longer than the corresponding distance of protrusion for the inner flange of the square or rectangular circumferential grooved profile.

According to an additional embodiment/aspect, in the connector according to any preceding aspect/embodiment, the connector halves have their butted strip ends arranged at different positions along the circumference of the connector after assembly, so that their joints between their butted strip ends do not coincide.

According to a further embodiment/aspect, in the connector of any of the above, each connector half comprises at least one tab protruding from the circumferential grooved profile as an extension of at least a part of one leg of its U-shaped cross-section.

According to one more embodiment/aspect, in the connector according to any of the above aspects/embodiments, the at least one tab has a free end being double-folded forming a flexible hook-like tongue adapted for detachable snap engagement with a complementary protrusion on the ventilation duct end when connected thereto.

According to an embodiment/aspect, in the connector of any preceding aspect/embodiment, each connector half has a substantially parallelepipedic shape or is a parallelepiped, whereby at least two of its parallel sides pairwise comprises at least one tab.

According to one further embodiment/aspect, in the connector according to any aspect/embodiment above, the free end of the at least one tab is folded double inwards towards the connector and around an axis being in parallel with the extension plane of the connector and perpendicular to the direction of joining of the connector. In another embodiment/aspect, each double folded tab extends inwards and towards the base of the associated U-shaped cross-section of the groove at an angle, i.e. not in parallel with the extension of any duct or duct element end, to accomplish a click or snap functionality by being able to hook over an associated complementary protrusion on/at the external surface of the associated duct or duct element end when joined to the connector.

In accordance with another embodiment/aspect, in the connector according to any aspect/embodiment above, at least one tab is provided with at least one slit at the joining (and/or intersection/transition) with a metal sheet section of each connector half.

According to one more embodiment/aspect, in the connector according to any aspect/embodiment above, one or two or more or each slit is configured to extend from one edge of the at least one tab.

According to yet an embodiment/aspect, in the connector according to any aspect/embodiment above, each slit is configured to be aligned with one of the edges of the at least one tab extending perpendicular to the longitudinal direction of the connector half.

Further objects and features of the present invention will appear from the following detailed description of aspects/examples of the invention.

### BRIEF DESCRIPTION OF THE DRAWINGS

The invention will now be explained in further details with reference to the drawings showing aspects thereof.
Fig. 1 is a perspective view from below of a device/connector for connecting square-shaped and/or rectangular ducts for ventilation, as a joint between the ducts according to the invention before assembly or after disassembly of the joint.
Fig. 2 is a cross-sectional view of a structure to reveal at least one or two connecting devices or connectors arranged inside a tight/narrow part/area/space of the structure being part of a building, such as a roof or ceiling of the building in one configuration according to the invention.
Fig. 3 is a schematic exploded view in perspective of the connector in Figs 1 and 2 showing it before assembly or after disassembly of its parts making it up according to the invention.
Fig. 4 is a perspective view of an aspect of the connector of Fig 3 after assembly.
Figs. 5A and 5B are cross-sectional side views of one of the connector parts/halves of fig. 3 along line A-A.
Fig. 6 is a cross-sectional side view of the parts of the connector of fig. 4 along line B-B.
Fig. 7 is a perspective view from above of a device/connector for connecting ducts as a joint between duct ends according to the invention before assembly/after disassembly of the joint.
Fig. 8 is a perspective view from above of the aspect of the connector in Fig 7 as a connecting joint between the duct ends after assembly of the joint.
Fig. 9 is a plan view of a sheet propagation of one of the parts making up the connector of Figs. 1 to 8 before being formed into the cross-sectional shapes of Figs. 5A, 5B and 6 and the square shapes of Figs. 1, 2, 3, 4, 6, 7, and 8.

### DETAILED DESCRIPTION

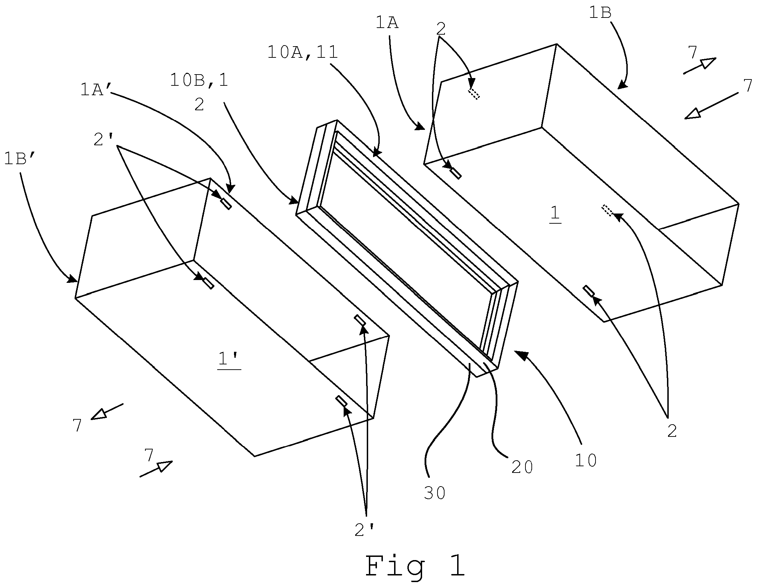

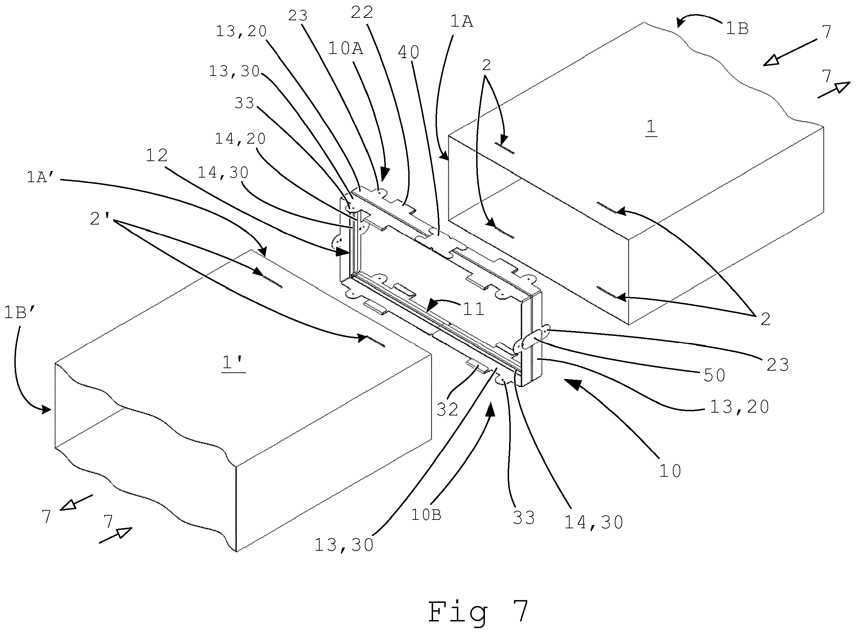

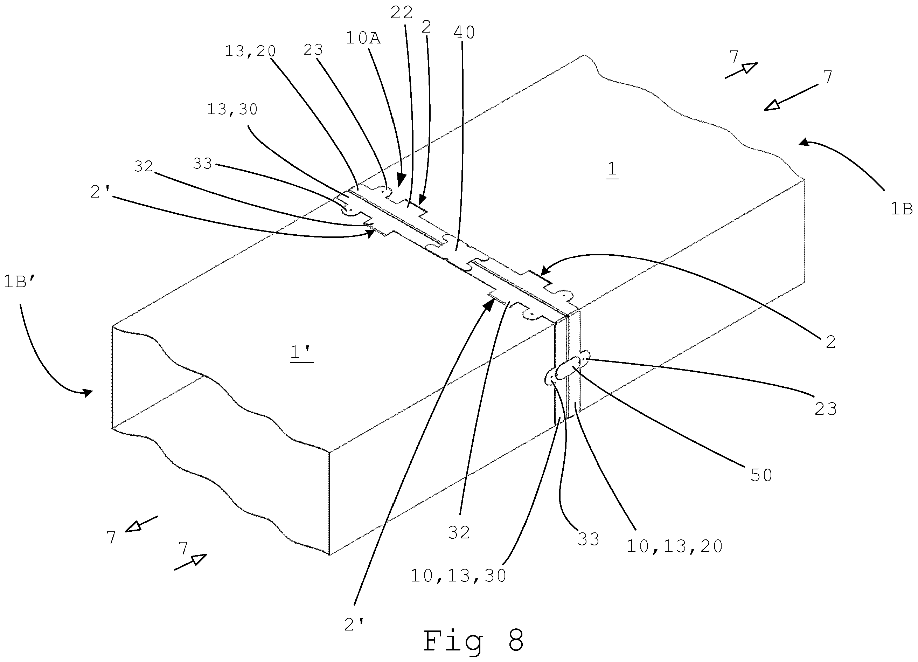

Aspects of the invention are disclosed herein by reference to Figures 1 to 9. One aspect or embodiment of the invention is disclosed in fig. 1 as a square-shaped connecting device or connector 10 for connecting square-shaped ducts 1, 1' or other components for ventilation, e.g. ventilator grills, sleeve couplings, bends and/or air outlets/inlets, as a joint or coupling arrangement between the ducts before assembly or after disassembly of these entities. Another embodiment of the invention is disclosed in fig. 7 as a square-shaped connecting device or connector 10 for connecting square-shaped ducts 1, 1' or other components for ventilation, such as ventilator grills, sleeve couplings and/or air outlets/inlets, straight or bent ones, as a joint or coupling arrangement between the ducts before assembly or after disassembly of these entities. The connector 10 is in some aspects/embodiments usable as a fenestrated or closed lid (not shown) to cover an end 1A, 1B, 1A', 1B' of a ventilation duct 1, 1'. Then, fastening means 22 on one part 13 of the connector 10, 20 would be arranged as corresponding fastening means 32 also on another part 14 of the 10, 30 or any of the fastening means 22 or 32 would be configured to be able to detachably attach a plate (not shown) in the form of a solid metal sheet to air-proof or sealingly cover an end 1A, 1B, 1A', 1B' of a first ventilation duct 1, 1' or a plate in the form of a grid enabling letting air 7 out of or into the first ventilation duct instead of detachably attaching another end 1A' or 1B' of another ventilation duct 1' to the end 1A or 1B of the first ventilation duct 1.

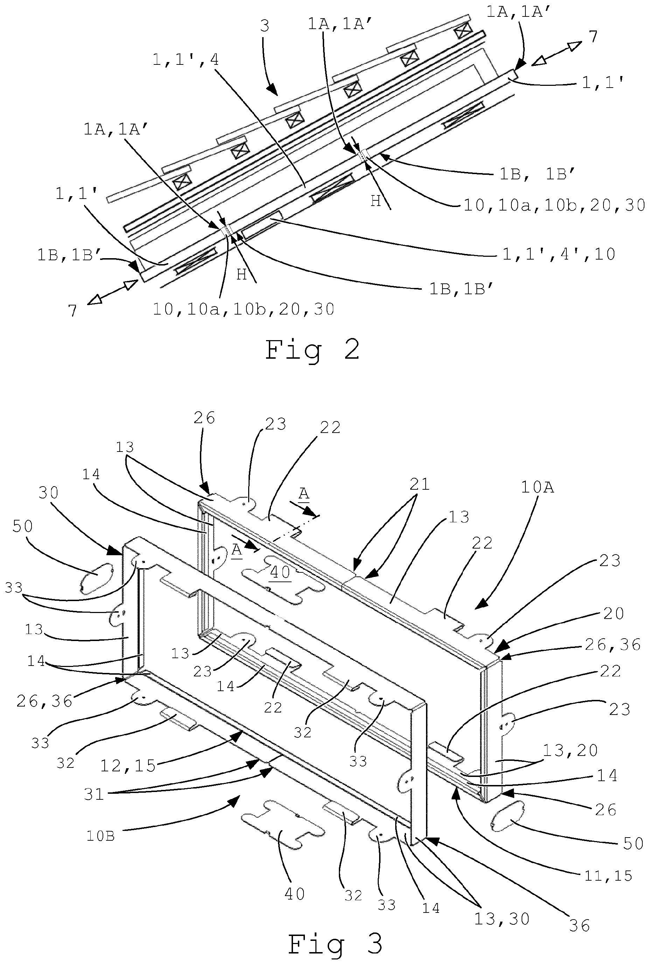

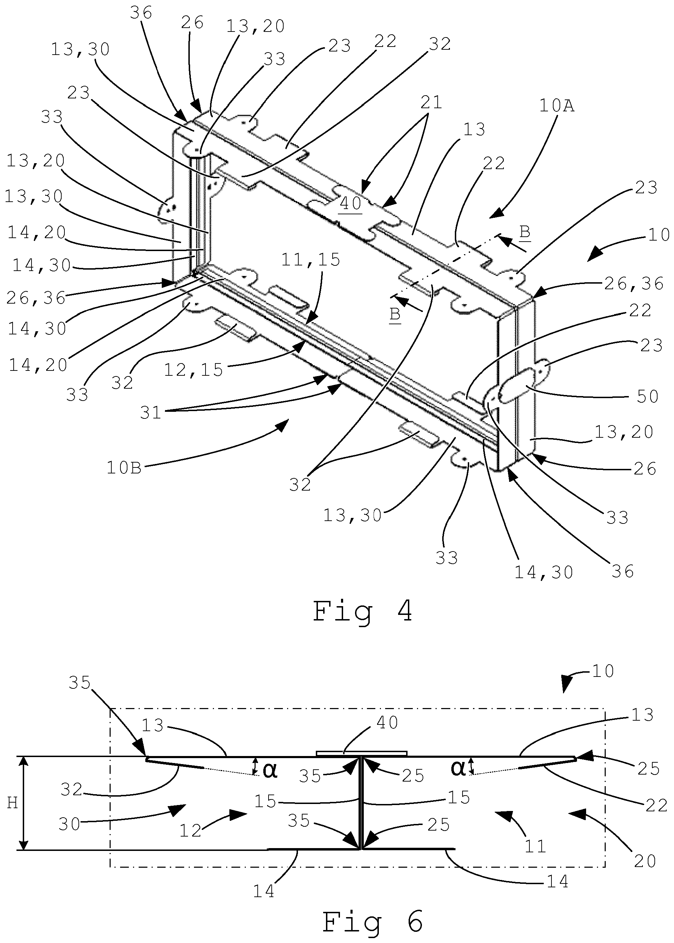

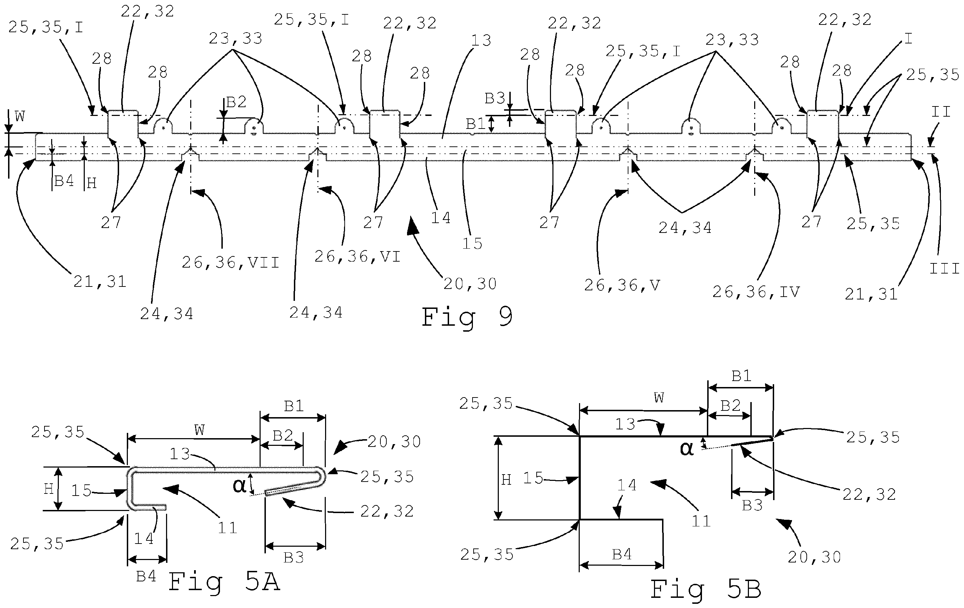

The connector 10 of the invention is made of strips of sheet metal 20, 30 as shown in Fig 9 as a sheet metal propagation before being formed by first being bent along its length and bending lines 25, 35, I-III into a U-shaped cross-section and secondly bent across or transversally relative its length along bending lines 26, 36, IV-VII extending in a perpendicular direction relative the longitudinally extending bending lines 25, 35. The connector 10 is bent in this way until its strip ends 21, 31 butt against each other forming a circumferential grooved profile or grooves 11, 12 with a circumferential square or rectangular frame shape (see Figs. 1, 3, 4 and 7). The connector 10 is configured to connect end-to-end two square-shaped or rectangular sheet metal air ducts 1, 1' (see Figs. 1, 7 and 8). The connector 10 is a structure with opposite end segments 10A, 10B, 20, 30, each of which presents the recess or groove 11, 12, which is open at its outer end 10A, 10B and closed at its inner end formed by a base 15 between legs 13 and 14 of the U-shape (see Figs. 5A, 5B and 6). The connector 10 is a hollow two-piece made of two end segments or halves 20, 30, each connector half being made of the thin sheet metal strip bent as above (see Figs. 3, 5A, 5B and 6). The inner end or base 15 of each connector half 20, 30 is adapted to be at least partly or fully filled with sealing means, e.g. rubber or sealing mastic, to make the joint airproof. The dimension of each recess or groove 11, 12 transverse to the longitudinal axis of the ducts 1, 1' and the connector 10 is adapted to be larger than the thickness of the ducts or duct elements, i.e. the thickness of the material making up a duct or duct element, to be joined for enabling sufficient space or volume for the sealing means when introduced therein. In one aspect, the grooves 11, 12 have a width that is larger than the maximum thickness of a corresponding duct. In another aspect, the grooves 11, 12 have a width that is substantially equal to the maximum thickness of a corresponding duct, i.e. the maximum thickness of the material making up a duct, so that each duct has a snug sliding fit in a corresponding groove. The thickness of the sheet metal is in some aspects between about 0.3 and 1.5 mm. In one aspect, the thickness of the sheet metal is in some aspects between about 0.4 and 1.3 mm. In another aspect, the thickness of the sheet metal is in some aspects between about 0.5 and 1.2 mm, but preferably between about 0.5 and 1 mm, more preferably between about 0.5 mm or about 0.6 mm or about 0.7 mm or 0.5 mm or 0.7 mm.

Each strip 20, 30 of sheet metal as shown in Fig 9 comprises in some aspects at least one recess or groove 24, 34 that enables bending of each strip into a connector half 20 and/or 30 as sheet metal material is cut off or away, i.e. if material was not cut away, the U-shaped cross-sectional strip 20, 30 would not be able to be bent into the square shapes of Figs. 1, 2, 3, 4, 7, and 8 as the legs 13 and 14 of the U would hinder this. In Fig 9, recess 24, 34 has a first square cut shape in the metal sheet section 14 of the strip 20, 30 that is to be bent into leg 14 at a first outer bending line 25, 35, III and a second triangular cut shape further cut into the metal sheet section 15 of the strip width and ending at an inner or innermost bending line 25, 35, II at the metal sheet section 13 and at/along which the strip 20, 30 is bent to form the base 15 and the other leg 13 of the U-shaped cross-section. Another outer bending line 25, 35, I is arranged at the tabs 22, 32 and configured to be bent along and/or about itself into a double-fold of the free ends of the tabs enabling a snap functionality against the duct ends 1A, 1B, 1A', 1B'. The second leg 14 of the U-shaped cross-section of each connector half/strip 20, 30 is bent at the first outer bending line 25, 35, III being arranged at a distance B4 as measured from one long side/longitudinal edge as seen in fig. 9.

The square-shaped connector 10 provides airproof joining of the square-shaped ventilation duct ends 1A, 1A' as its first circumferential groove 11 is adapted to receive a first ventilation duct end 1A, 1B and its second circumferential groove 12 is adapted to receive a second ventilation duct end 1A', 1B', and by means of its square shaped connector halves 20, 30 being fixedly attached to each other in a mirrored and aligned arrangement with the bases 15 of the U-shaped cross-sections of the grooves 11, 12 abutting against each other back to back (see Fig 6) enabling slidably receiving and tightly holding the adjacent ends 1A, 1A' or 1B, 1B' of the two ducts 1, 1', e.g. inside a part of a building, such as a roof or wall or floor or ceiling 3.

The strip ends 21, 31 and each connector half 20, 30 is attached together by fastening plates, one large plate 40 and one small plate 50 (see figs. 3 , 4), e.g. by welding or gluing or brazing or hard soldering. Hence, the connector 10 comprises two square-shaped circumferential grooves 11, 12 facing in opposite directions away from each other to be able to snugly receive one associated duct end 1A, 1A', 1B, 1B' in each groove when connected thereto.

At least one or each connector half 20, 30, in some aspects/embodiments, comprise/-s at least one tab 22, 32 protruding from the associated circumferential groove 11, 12 as an extension of at least a part of one leg 13, 14 of its U-shaped cross-section. Such a at least one tab 22, 32 comprises in some aspects/embodiments a free end being double-folded forming a flexible hook-like tongue adapted for detachable snap engagement with a complementary protrusion 2, 2' on the associated ventilation duct end 1A, 1A', 1B, 1B' when connected thereto by sliding the duct ends into the grooves 11, 12 until they bottom in the groove and the tab 22, 32 has passed over the protrusion 2, 2' and snaps over it.

The legs or flanges 13, 14 of the square-shaped circumferential grooves 11, 12 extend in the longitudinal direction of the connector 10 and the ducts 1, 1' and their directions of joining. The legs or flanges 13, 14 have different lengths, in other words, an outer leg or flange 13 of each square-shaped circumferential grooved profile or groove 11 or 12 protrudes a distance from the base 15 of the associated U-shaped cross-section being larger/longer than the corresponding distance of protrusion for an inner leg or flange 14 of the same square-shaped circumferential groove 11 or 12. The connector halves 20, 30 have their butted strip ends 21, 31 arranged at different positions along the circumference of the connector 10 after assembly, so that their joints between their butted strip ends do not coincide. This is accomplished in that the connector halves 20, 30 are identical but turned back to back and one of them turned or rotated 180° around a centre axis (not shown) of the connector, which centre axis extends in parallel with the longitudinal direction of the ducts 1, 1', i.e. rotated 180° in the same plane as its plane of extension, and then attached back to back to the other connector half, see Fig 3 where connector half 20 has its joined ends 21 at its upper part and the connector half 30 has its joined ends 31 at its lower part.

In another aspect of the invention, the square-shaped connector 10 according to any of the above aspects comprises each connector half 20, 30 having a substantially parallelepipedic shape or is a parallelepiped, whereby at least two of its sides pairwise comprises at least one tab 22, 23, 32, 33 or three of its sides comprises at least one tab each or four of its sides comprises at least one tab each, i.e. all of its sides comprises at least one tab each. The tabs 22, 23, 32, 33 are each configured to detachably hold the duct ends 1A, 1A' or 1B, 1B' pairwise together. The free end of at least one tab 22, 32 is folded along line 25, 35, I at a distance B1 from the metal sheet section 13, see figs. 5A, 5B, 6 and 9. The metal sheet section 13 is formed by being folded along another line 25, 35, II at a distance W from one end/edge/long side of the connector half 20, 30, see figs. 5A, 5B, 6 and 9. Distance B1 of the tab 22, 32 is configured for enabling its double-folded free end to be folded into a very thin shape/thickness/height as to not collide with the metal sheet section 13 when folded together. The free end of at least one tab 22, 32 is folded double inwards towards the connector 10/connector half 20, 30 and around an axis (bending line 25, 35, I) being in parallel with the extension plane of each connector half and perpendicular to the direction of joining of the connector half and also in some aspects embodiments perpendicular to the longitudinal direction of the ducts, but if ducts are bent or differently shaped or different components are joined, e.g. a straight duct 1 on one connector end 10A and a duct bend on the other connector end 10B, then the folding tab axis may be differently orientated in relation thereto. This first bending line 25, 35, I is arranged at a distance B3 from the free end of the sheet metal tab 22, 32 before it is bend, see fig. 9. In another aspect or embodiment, each double folded tab 22, 32 extends inwards and towards the base 15 of the associated U-shaped cross-section of the groove 11, 12 at an angle α (see figs. 5A, 5B and 6), i.e. not in parallel with the extension of any duct 1, 1' or duct element end 1A, 1B, 1A', 1B', to accomplish a click or snap functionality by being able to hook over the associated complementary protrusion 2, 2' on/at the external surface of the associated duct or duct element end when joined to the connector 10. One, two or more snap tabs 22, 32 is in some aspects double-folded with angle α or all tabs 22, 32 are double-folded in this way. The same goes for fastening tabs 23, 33, i.e. one or more or all of them could be double-folded with or without angle α, but could as shown be single-layered and not double-folded. The fastening tabs 23, 33 has a length B2, see fig. 9. This first bending line 25, 35, I is arranged at a distance B3 from the free end of the sheet metal tab 22, 32 before it is bend, see fig. 9. The ange α is as small as possible, i.e. as close to zero as possible but large enough to secure the snapin functionality. The angle α is preferably less than 20° or more preferred less than 15° or most preferred between about 1° to 10° to secure the snapin and/or snapout and provide the connector 10 and each connector half 20, 30 with an ultra low building height H. The tolerance of folding is about +/- 5°. This means that folding is done into the final angle α within these tolerances. The angle α is in some aspects about 5° or 5° minimum or less. The angle α is in some aspects not more than about 20° or not more than 20° or not more than 15°. The angle α is in some aspects about 10° or 10° or 15° maximum.

At least one or two or more tabs or all tabs 22, 32 is configured for being optionally provided with at least one or two slits 27 at the intersection/joining/cornering/transition with the metal sheet section or leg 13, see fig. 9, where the distance/measure W defines section 13 of each sheet metal connector half/strip 20, 30 into which the slit 27 penetrate when made. The slit 27 is in some aspects about 1 to 5 mm long, i.e. extends about 1 to 5 mm into the metal of the section 13 as seen in fig. 9. In a preferred aspect, the slit is about 4 to 5 mm long, i.e. extends about 4 to 5 mm into the metal of the section 13 as seen in fig. 9. Each optional slit 27 is configured to extend from one edge 28 of the tab 22, 32. Each optional slit 27 is configured to extend from where one edge 28 of the tab 22, 32 meets or ends at the intersection or joining or transition with the metal sheet section 13, i.e. at the inner corner between these entitities as shown in fig. 9. Each optional slit 27 is provided as an extension of one edge 28 of the tab 22, 32. The slit 27 is aligned/extend in parallel with one associated edge 28 of the edges of the tab 22, 32. Each tab edge 28 is perpendicular to the length or longitudinal direction of the connector half 20, 30. If two slits 27 are provided they form an extension of the width of the tab 22, 32. Each slit 27 is aligned/in parallel with a corresponding tab edge 28 extending perpendicular to the length or longitudinal direction of the connector half 20, 30. Each slit 27 is configured for enabling different/varying flexibilities for the tab 22, 32 when it snaps into position on the duct 1, 1' and/or when it snaps out of position from the duct. Each slit 27 is configured for enabling adapting the flexibility of the tab 22, 32 when it snaps into position on the duct 1, 1' to achieve better and easier repeatability of joining. Each slit 27 is configured for enabling adapting the flexibility of the tab 22, 32 when it snaps out of position from the duct 1, 1' to achieve better and easier repeatability of dismounting/disassembly. This provides a joint that is more durable and provides a better safety against leaks and/or breaks due to movements and subsidence, at least small ones, e.g. if one duct end 1A, 1A' moves or is somewhat displaced relative the other duct end 1B, 1B' during and/or after joining. The tab 22, 32 has an improved flexibility with one or more slits 27 than without enabling more/better control of the joining of ducts and the connector 10 while maintaining or even improving sealing. The tab 22, 32 has an improved detachability with one or more slits 27 than without facilitating disassembly of ducts 1, 1' and the connector 10 without compromising any sealing. In some aspects, only one slit 27 for each tab 22, 32 is provided to give a less flexible tab than with two slits 27 but provides a more flexible tab compared to using no slits 27. This slitting also provides a joint that is better suited, i.e. more prone to absorb/accommodate/adapt to different/varying tolerances, e.g. due to ducts of different quality and/or sizes and/or human errors if non-competent fitters install the ducts and connectors. The building height H of the connector 10 and each connector half 20, 30 is formed by the distance H between the bending lines 25, 35, II, III in fig. 9. However, the absolute measures of the parameters B1 to B4, H and W in the finally shaped connector half 20, 30 depend on the bending radius and thickness of the sheet metal being bent, but as the sheet metal is so thin, not more than 1.5 mm or even as thin as 0.3/0.5/0.7 mm, this make measures B1 to B4, H and W sufficiently accurate/precise in the finished product, wherefore these measures on the sheet metal strip of fig. 9 are transferable to the same/corresponding measures B1 to B4, H and W for the finished entity of figs. 5A and 5B without any exaggeration, i.e. any discrepance in dimensions is negligible. The same goes for bending at the bending lines 26, 36, IV, V, VI, VII and the resulting shapes and dimensions of the finished connector 10 and connector halves 20, 30.

The square-shaped connector 10 is provided for joining a first ventilation duct or component 1 and a second ventilation duct or component 1' in an airproof way end to end joint. By using at least one additional tab 23, 33 besides the other tabs 22, 32 the sliding movement into position of the duct or component ends 1A, 1A', 1B, 1B' into the connector 10 is improved in better and more stable guiding of the ends as a longer sliding surface is created and a better and more secure fastening is possible by making holes in the additional tabs 23, 33 and drive screws through the overlapping connector and inner duct or component end sections.

In Fig 2, the connector 10 is part of at least two channels 4, 4' formed by at least two ducts 1, 1' and at least one connector. Each channel 4, 4' extends through an inner space/layer of a roof or ceiling 3. A first channel 4 extends in a direction upwards or downwards along the inclination of the roof/ceiling, i.e. extends in a plane in parallel with the plane of Fig 2. A second channel 4' extends in a direction along the roof/ceiling 3 but in the length-/breadth-wise direction of the roof/ceiling. The second channel extends in a plane being perpendicular to the plane of Fig 2. It is clear that the connector 10 according to the invention enables laying out square-shaped ventilation channels 4, 4' with a very low building height in very narrow and/or tight spaces/layers of buildings/marine vessels/marine applications with dimensions so small that hitherto known connectors for joining ventilation ducts were impossible to use as they are too bulky/large. As the free end of at least one tab 22, 32 is folded along one line 25, 35, I at a distance B1 from the metal sheet section 13, which metal sheet section 13 in turn is formed by being folded along another line 25, 35, II at a distance W from one end/edge/long side of the connector half 20, 30, see figs. 5A, 5B, 6 and 9, this enables its double-folded free end to be folded into a very thin shape/thickness/height that provides the connector 10 and each connector half 20, 30 with a very low building height H, see figs. 2, 5 and 6. This is achieved by enabling its double-folded free end to be folded into a very thin shape and/or thickness and/or height that provides each connector half 20, 30 with a very low building height H. This ultra/very low building height H is further achieved by use of thin sheet metal for the connector 10. This ultra/very low building height H is further achieved by use of thin sheet metal for each connector half 20, 30. Each of the fastening plates 40, 50 (see figs. 3, 4 and 6) are made of thin sheet metal, wherefore anyone of these plates adds marginally, even negligible to the building height H when attached to connector halves 20, 30 to form the connector 10 due to standard building tolerances. In some aspects, the fastening plates 40, 50 may optionally be eliminated, i.e. not used, if the connector halves are attached together securely by other means, e.g. welding and/or soldering and/or gluing, whereby the building height H is even less affected. In one example, the height H is about between 4 to 7 mm or about 5 mm or 5 mm. In another example, the sum of distance W + B1 is about 25 to 35 mm or about 30 mm or about 28 mm or 28 mm. In yet one example, the distance/length B2 is about 10 to 20 mm or about 15 mm or about 14 mm or 14 mm. In another example, the distance/length B3 is about 8 to 12 mm or about 10 mm or about 9 mm or 9 mm. In yet an example, the sum of distance B1 + B3 is about 20 to 30 mm or about 22 mm or 22 mm. In one more example, the distance W is about 10 to 20 mm or about 15 mm or 15 mm. In a further example, the distance/length B4 is about 4 to 8 mm or about 6 mm or 6 mm. The lengths or distances B3 and B4 are kept separated as shown in figs. 5A and 5B to eliminate that the free end of the tab 22, 32 and the second leg 13 collide, i.e. they will not overlap in the finished connector half 20, 30 to enable the ultra low building height H. Moreover, in one example, the full width of the sheet metal strip/half 20, 30 of fig. 9 before being bent is the sum of B1 + B3 + W + H + B4 being between about 30 to 60 mm or about 40 to 50 mm or about 48 mm or 48 mm.

### NOMENCLATURE

1 First ventilation duct/component
1' Second ventilation duct/component
1A first end of the first ventilation duct
1B second end of the first ventilation duct
1A' first end of the second ventilation duct
1B' second end of the second ventilation duct
2 Complementary protrusion on/at an end of the first ventilation duct
2' Complementary protrusion on/at an end of the second ventilation duct
3 Roof/Wall/Floor/Ceiling of a building
4 A first ventilating/Ventilation channel formed by at least two ducts and one connector according to the invention
4' A second ventilating/Ventilation channel formed by at least two ducts and one connector according to the invention
10 Square-shaped connector
10A First end of square-shaped connector
10B Second end of square-shaped connector
11 First circumferential groove of the square-shaped connector
12 Second circumferential groove of the square-shaped connector
13 First leg of the U-shaped cross-section of each connector half
14 Second leg of the U-shaped cross-section of each connector half
15 Bottom/Base of the U-shaped cross-section of each connector half
20 One/First connector half
21 End of a thin sheet metal strip of the first connector half
22 One fastening/snap tab of the first connector half
23 Another fastening tab of the first connector half
25 Bending line along the length of the thin sheet metal strip of the first connector half
26 Bending line across the length of the thin sheet metal strip of the first connector half
27 Slit of tab 22, 32
28 Edges of tab 22, 32
30 Another/Second connector half
31 End of thin sheet metal strip of the second connector half
32 One fastening/snap tab of the second connector half
33 Another fastening tab of the second connector half
35 Bending line along the length of the thin sheet metal strip of the second connector half
36 Bending line across the length of the thin sheet metal strip of the second connector half
40 First/Large fastening plate
50 Second/Small fastening plate

## Claims

1. A connector (10) made of strips of sheet metal (20, 30) for airproof joining of square-shaped or rectangular ventilation duct ends (1A, 1A', 1B, 1B'), the connector (10) made of strips of sheet metal (20, 30) forms a circumferential grooved profile or grooves (11, 12) with a circumferential square or rectangular frame shape comprising a first circumferential groove (11) configured for receiving a first ventilation duct end (1A, 1B) and a second circumferential groove (12) configured for receiving a second ventilation duct end (1A', 1B'), wherein the connector (10) is a hollow two-piece made of two halves (20, 30), each connector half being made of a thin sheet metal strip (20, 30) bent along its length into a U-shaped cross-section and across its width with its strip ends (21, 31) butt against each other into the grooved profile (11, 12) with the circumferential square or rectangular frame shape, by means of the square or rectangular shaped connector halves (20, 30) being fixedly attached to each other in a mirrored and aligned arrangement with bases of the U-shaped cross-sections of the grooved profiles (11, 12) abutting against each other back to back, whereby the connector (10) comprises two square or rectangular circumferential grooves facing in opposite directions away from each other to be able to snugly receive one ventilation duct end (1A, 1A', 1B, 1B') in each groove when connected thereto,
**characterized in that** each connector half (20, 30), at at least two of its sides, pairwise comprises at least one fastening tab (22, 23, 32, 33), which tabs are each configured to detachably hold the ventilation duct ends (1A, 1A', 1B, 1B') pairwise together.

2. A connector (10) according to claim 1, wherein the U-shaped cross-section of each connector half (20, 30) has legs (13, 14) of different protruding lengths.

3. A connector (10) according to claim 2, wherein one leg (13) of the U-shaped cross-section of each connector half (20, 30) is one outer flange (13) being the outermost/external periphery of the connector half and the other leg (14) of the U-shaped cross-section of each connector half (20, 30) is one inner flange (14) being the innermost/internal periphery of the connector half.

4. A connector (10) according to claim 2 or 3, wherein the legs or flanges (13, 14) of the square or rectangular circumferential grooved profile (11, 12) extend in the longitudinal direction of the connector (10) and its direction of joining.

5. A connector (10) according to claim 3 or 4 when claim 4 depends on claim 3, wherein the outer flange (13) of the square or rectangular circumferential grooved profile (11, 12) protrudes a distance from the base of the associated U-shaped cross-section being larger/longer than the corresponding distance of protrusion for the inner flange (14) of the square or rectangular circumferential grooved profile (11, 12).

6. A connector (10) according to any preceding claim, wherein the connector halves (20, 30) have their butted strip ends (21, 31) arranged at different positions along the circumference of the connector (10) after assembly, so that their joints between their butted strip ends do not coincide.

7. A connector (10) according to any preceding claim, wherein each connector half (20, 30) comprises at least one tab (22, 23, 32, 33) protruding from the square or rectangular circumferential grooved profile (11, 12) as an extension of at least a part of one leg of its U-shaped cross-section.

8. A connector (10) according to claim 7, wherein the at least one tab (22, 32) has a free end being double-folded forming a flexible hook-like tongue adapted for detachable snap engagement with a complementary protrusion (2, 2') on the ventilation duct end (1A, 1A', 1B, 1B') when connected thereto.

9. A connector (10) according to claim 7 or 8, wherein each connector half (20, 30) has a substantially parallelepipedic shape or is a parallelepiped, whereby at least two of its parallel sides pairwise comprises at least one tab (22, 23, 32, 33).

10. A connector (10) according to claim 8 or 9 when claim 9 is dependent on claim 8, wherein the free end of the at least one tab (22, 32) is folded double inwards towards the connector (10) and around an axis being in parallel with the extension plane of the connector and perpendicular to the direction of joining of the connector.

11. A connector (10) according to claim 7, 8, 9 when claim 9 is dependent on claim 8 or 10, wherein at least one tab (22, 32) is provided with at least one slit (27) at the joining with a metal sheet section (13) of each connector half (20, 30).

12. A connector (10) according to claim 11, wherein each slit (27) is configured to extend from one edge of the at least one tab (22, 32).

13. A connector (10) according to claim 12, wherein each slit (27) is aligned with one of the edges of the at least one tab (22, 32) extending perpendicular to the longitudinal direction of the connector half (20, 30).

## Patentansprüche

1. Verbinder (10), der aus Streifen aus Metallblech (20, 30) zum luftdichten Zusammenfügen von quadratisch geformten oder rechteckigen Belüftungskanalenden (1A, 1A', 1B, 1B') hergestellt ist, wobei der Verbinder (10), der aus Streifen aus Metallblech (20, 30) hergestellt ist, ein genutetes Umfangsprofil oder Nuten (11, 12) mit einer quadratischen oder rechteckigen Umfangsrahmenform bildet, die eine erste Umfangsnut (11), die zum Aufnehmen eines ersten Belüftungskanalendes (1A, 1B) konfiguriert ist, und eine zweite Umfangsnut (12) umfasst/umfassen, die zum Aufnehmen eines zweiten Belüftungskanalendes (1A', 1B') konfiguriert ist, wobei der Verbinder (10) ein hohler Zweiteiler ist, der aus zwei Hälfte (20, 30) hergestellt ist, wobei jede Verbinderhälfte aus einem dünnen Metallblechstreifen (20, 30) hergestellt ist, der entlang seiner Länge in einen U-förmigen Querschnitt und über seine Breite derart gebogen ist, dass seine Streifenenden (21, 31) aneinander in das genutete Profil (11, 12) mit der quadratischen oder rechteckigen Umfangsrahmenform anliegen, indem die quadratisch oder rechteckig geformten Verbinderhälften (20, 30) in einer gespiegelten und ausgerichteten Anordnung fest aneinander angebracht werden, wobei Basen der U-förmigen Querschnitte der genuteten Profile (11, 12) Rückseite an Rückseite aneinander angrenzen, wobei der Verbinder (10) zwei quadratische oder rechteckige Umfangsnuten umfasst, die in entgegengesetzten Richtungen voneinander abgewandt sind, um dazu in der Lage zu sein, ein Belüftungskanalende (1A, 1A', 1B, 1B') in jeder Nut eng anliegend aufzunehmen, wenn dieses damit verbunden ist,
**dadurch gekennzeichnet, dass** jede Verbinderhälfte (20, 30) an mindestens zwei ihrer Seiten paarweise mindestens eine Befestigungslasche (22, 23, 32, 33) umfasst, wobei die Laschen jeweils dazu konfiguriert sind, die Belüftungskanalenden (1A, 1A', 1B, 1B') paarweise lösbar zusammenzuhalten.

2. Verbinder (10) nach Anspruch 1, wobei der U-förmige Querschnitt jeder Verbinderhälfte (20, 30) Schenkel (13, 14) an unterschiedlichen vorstehenden Längen aufweist.

3. Verbinder (10) nach Anspruch 2, wobei ein Schenkel (13) des U-förmigen Querschnitts jeder Verbinderhälfte (20, 30) ein Außenflansch (13) ist, bei dem es sich um den äußersten/externen Randbereich der Verbinderhälfte handelt, und der andere Schenkel (14) des U-förmigen Querschnitts jeder Verbinderhälfte (20, 30) ein Innenflansch (14) ist, bei dem es sich um den innersten/internen Randbereich der Verbinderhälfte handelt.

4. Verbinder (10) nach Anspruch 2 oder 3, wobei sich die Schenkel oder Flansche (13, 14) des quadratischen oder rechteckigen genuteten Umfangsprofils (11, 12) in die Längsrichtung des Verbinders (10) und in seine Richtung des Zusammenfügens erstrecken.

5. Verbinder (10) nach Anspruch 3 oder 4, bei Abhängigkeit von Anspruch 4 von Anspruch 3, wobei der Außenflansch (13) des quadratischen oder rechteckigen genuteten Umfangsprofils (11, 12) um eine Entfernung von der Basis des zugeordneten U-förmigen Querschnitts hervorsteht, die größer/länger als die entsprechende Entfernung des Vorstehens für den Innenflansch (14) des quadratischen oder rechteckigen genuteten Umfangsprofils (11, 12) ist.

6. Verbinder (10) nach einem der vorhergehenden Ansprüche, wobei die endverstärkten Streifenenden (21, 31) der Verbinderhälften (20, 30) nach dem Zusammenbauen an unterschiedlichen Positionen entlang des Umfangs des Verbinders (10) angeordnet sind, sodass ihre Verbindungsstellen zwischen ihren endverstärkten Enden nicht zusammenfallen.

7. Verbinder (10) nach einem der vorhergehenden Ansprüche, wobei jede Verbinderhälfte (20, 30) mindestens eine Lasche (22, 23, 32, 33) umfasst, die von dem quadratischen oder rechteckigen genuteten Umfangsprofil (11, 12) als eine Verlängerung an mindestens einem Teil eines Schenkels seines U-förmigen Querschnitts vorsteht.

8. Verbinder (10) nach Anspruch 7, wobei die mindestens eine Lasche (22, 32) ein freies Ende aufweist, das doppelt gefaltet ist und dadurch eine flexible, hakenartige Zunge bildet, die zum lösbaren Schnappeingriff mit einem zusammenpassenden Vorsprung (2, 2') an dem Belüftungskanalende (1A, 1A', 13, 13') angepasst ist, wenn sie damit verbunden ist.

9. Verbinder (10) nach Anspruch 7 oder 8, wobei jede Verbinderhälfte (20, 30) eine im Wesentlichen parallelpeptidische Form aufweist oder ein Parallelpeptid ist, wodurch mindestens zwei ihrer parallele Seiten paarweise mindestens eine Lasche (22, 23, 32, 33) umfassen.

10. Verbinder (10) nach Anspruch 8 oder 9, bei Abhängigkeit von Anspruch 9 von Anspruch 8, wobei das freie Ende der mindestens einen Lasche (22, 32) doppelt nach innen in Richtung des Verbinders (10) und um eine Achse gefaltet ist, die parallel zu der Verlängerungsebene des Verbinders und senkrecht zu der Richtung des Zusammenfügens des Verbinders ist.

11. Verbinder (10) nach Anspruch 7, 8, 9, bei Abhängigkeit von Anspruch 9 von Anspruch 8 oder 10, wobei mindestens eine Lasche (22, 32) mit mindestens einem Schlitz (27) an der Zusammenfügung mit einem Metallblechabschnitt (13) jeder Verbinderhälfte (20, 30) bereitgestellt ist.

12. Verbinder (10) nach Anspruch 11, wobei jeder Schlitz (27) dazu konfiguriert ist, sich von einer Kante der mindestens einen Lasche (22, 32) zu erstrecken.

13. Verbinder (10) nach Anspruch 12, wobei jeder Schlitz (27) mit einer der Kanten der mindestens einen Lasche (22, 32) ausgerichtet ist, die sich senkrecht zu der Längsrichtung der Verbinderhälfte (20, 30) erstreckt.

## Revendications

1. Connecteur (10) constitué de bandes de tôle (20, 30) pour une jonction étanche à l'air d'extrémités de conduit de ventilation de forme carrée ou rectangulaire (1A, 1A', 1B, 1B'), le connecteur (10) constitué de bandes de tôle (20, 30) forme un profil rainuré circonférentiel ou des rainures (11, 12) avec une forme de cadre carrée ou rectangulaire circonférentielle comprenant une première rainure circonférentielle (11) configurée pour recevoir une première extrémité de conduit de ventilation (1A, 1B) et une seconde rainure circonférentielle (12) configurée pour recevoir une seconde extrémité de conduit de ventilation (1A', 1B'), dans lequel le connecteur (10) est un ensemble double creux constitué de deux moitiés (20, 30), chaque moitié de connecteur étant constituée d'une fine bande de tôle (20, 30) pliée sur sa longueur en une section transversale en forme de U et sur sa largeur, ses extrémités de bande (21, 31) viennent en butée l'une contre l'autre dans le profil rainuré (11, 12) avec la forme de cadre carrée ou rectangulaire circonférentielle, au moyen des moitiés de connecteur de forme carrée ou rectangulaire (20, 30) étant fixées de manière fixe l'une à l'autre dans un agencement en miroir et alignées avec des bases des sections transversales en forme de U des profils rainurés (11, 12) venant en butée l'une contre l'autre dos à dos, moyennant quoi le connecteur (10) comprend deux rainures circonférentielles carrées ou rectangulaires se faisant face dans des directions opposées éloignées l'une de l'autre pour pouvoir recevoir confortablement une extrémité de conduit de ventilation (1A, 1A', 1B, 1B') dans chaque rainure lorsqu'il y est connecté,
**caractérisé en ce que** chaque moitié de connecteur (20, 30), au niveau d'au moins deux de ses côtés, comprend par paire au moins une languette de fixation (22, 23, 32, 33), lesquelles languettes sont chacune configurées pour maintenir de manière amovible les extrémités de conduit de ventilation (1A, 1A', 1B, 1B') par paire.

2. Connecteur (10) selon la revendication 1, dans lequel la section transversale en forme de U de chaque moitié de connecteur (20, 30) a des pattes (13, 14) de longueurs saillantes différentes.

3. Connecteur (10) selon la revendication 2, dans lequel une patte (13) de la section transversale en forme de U de chaque moitié de connecteur (20, 30) est une bride externe (13) étant la périphérie la plus extérieure/externe de la moitié de connecteur et l'autre patte (14) de la section transversale en forme de U de chaque moitié de connecteur (20, 30) est une bride interne (14) étant la périphérie la plus intérieure/interne de la moitié de connecteur.

4. Connecteur (10) selon la revendication 2 ou 3, dans lequel les pattes ou brides (13, 14) du profil rainuré circonférentiel carré ou rectangulaire (11, 12) s'étendent dans la direction longitudinale du connecteur (10) et dans sa direction de jonction.

5. Connecteur (10) selon la revendication 3 ou 4 lorsque la revendication 4 dépend de la revendication 3, dans lequel la bride externe (13) du profil rainuré circonférentiel carré ou rectangulaire (11, 12) fait saillie sur une distance de la base de la section transversale en forme de U associée étant plus grande/plus longue que la distance correspondante de saillie pour la bride interne (14) du profil rainuré circonférentiel carré ou rectangulaire (11, 12).

6. Connecteur (10) selon une quelconque revendication précédente, dans lequel les moitiés de connecteur (20, 30) ont leurs extrémités de bande en butée (21, 31) agencées à différentes positions le long de la circonférence du connecteur (10) après assemblage, de sorte que leurs jointures entre leurs extrémités de bande en butée ne coïncident pas.

7. Connecteur (10) selon une quelconque revendication précédente, dans lequel chaque moitié de connecteur (20, 30) comprend au moins une languette (22, 23, 32, 33) faisant saillie à partir du profil rainuré circonférentiel carré ou rectangulaire (11, 12) en tant qu'extension d'au moins une partie d'une patte de sa section transversale en forme de U.

8. Connecteur (10) selon la revendication 7, dans lequel l'au moins une languette (22, 32) a une extrémité libre étant pliée en deux formant une languette flexible en forme de crochet conçue pour une mise en prise par encliquetage détachable avec une saillie complémentaire (2, 2') sur l'extrémité du conduit de ventilation (1A, 1A', 1B, 1B') lorsqu'il y est connecté.

9. Connecteur (10) selon la revendication 7 ou 8, dans lequel chaque moitié de connecteur (20, 30) a une forme sensiblement parallélépipédique ou est un parallélépipède, moyennant quoi au moins deux de ses côtés parallèles comprennent par paire au moins une languette (22, 23, 32, 33).

10. Connecteur (10) selon la revendication 8 ou 9 lorsque la revendication 9 dépend de la revendication 8, dans lequel l'extrémité libre de l'au moins une languette (22, 32) est pliée en double vers l'intérieur vers le connecteur (10) et autour d'un axe étant parallèle au plan d'extension du connecteur et perpendiculaire à la direction de jonction du connecteur.

11. Connecteur (10) selon la revendication 7, 8, 9 lorsque la revendication 9 dépend de la revendication 8 ou 10, dans lequel au moins une languette (22, 32) est dotée d'au moins une fente (27) au niveau de la jonction avec une section de tôle (13) de chaque moitié de connecteur (20, 30).

12. Connecteur (10) selon la revendication 11, dans lequel chaque fente (27) est configurée pour s'étendre à partir d'un bord de l'au moins une languette (22, 32).

13. Connecteur (10) selon la revendication 12, dans lequel chaque fente (27) est alignée avec l'un des bords de l'au moins une languette (22, 32) s'étendant perpendiculairement à la direction longitudinale de la moitié de connecteur (20, 30).
